(19)

Europäisches
Patentamt
European
Patent Office
Office européen
des brevets

(11) **EP 2 195 374 B1**

(12) **EUROPEAN PATENT SPECIFICATION**

(45) Date of publication and mention
of the grant of the patent:
**10.07.2013 Bulletin 2013/28**

(51) Int Cl.:
**C08K 3/04** (2006.01)     **C08K 7/00** (2006.01)

(21) Application number: **08804922.6**

(22) Date of filing: **30.09.2008**

(86) International application number:
**PCT/EP2008/063088**

(87) International publication number:
**WO 2009/043850 (09.04.2009 Gazette 2009/15)**

(54) **HEAT-PROCESSABLE THERMALLY CONDUCTIVE POLYMER COMPOSITION**

WÄRMEVERARBEITBARE WÄRMELEITENDE POLYMERZUSAMMENSETZUNG

COMPOSITION DE POLYMÈRE THERMIQUEMENT CONDUCTRICE QUI PEUT ÊTRE TRAITÉE
PAR LA CHALEUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **01.10.2007 EP 07019267**

(43) Date of publication of application:
**16.06.2010 Bulletin 2010/24**

(73) Proprietor: **DSM IP Assets B.V.
6411 TE Heerlen (NL)**

(72) Inventors:
• **POT, Abel, Frans
NL-6446AW Brunssum (NL)**

• **DIJK, VAN, Hans, Klaas
NL-6133VA Sittard (NL)**
• **JANSSEN, Robert, Hendrik, Catharina
NL-6191PC Beek (NL)**

(74) Representative: **van der Ploeg, Antonius
Franciscus M.J.
DSM Intellectual Property
P.O. Box 4
6100 AA Echt (NL)**

(56) References cited:
**US-A1- 2003 220 432     US-A1- 2004 127 621**

**Description**

The present invention relates to a heat-processable thermally conductive polymer composition comprising a thermoplastic polymer and thermally conductive filler, and a process for its preparation.

Heat built-up in electronic components, lighting, transformer housings and other devices that produce unwanted heat can severely limit service life and reduce operating efficiency. Metal, an excellent thermal conductor, has traditionally been used for thermal management equipment such as heat sinks and heat exchangers. However, the metal parts suffer from heavy weight and high production costs. Thus, they are being replaced by injection mouldable and extrudable heat-conducting polymer compositions that provide lightweight cooling solutions. Advantages include design flexibility, parts consolidation, corrosion and chemical resistance, reduction of secondary finishing operations and the processing benefits of polymers.

Thermally conductive polymer compositions are typically formed by loading a variety of thermally conductive fillers including metals, ceramics or carbon into a base polymer matrix, wherein the fillers impart thermal conductivity properties to the overall composition. Specifically, examples of common thermally conductive filler materials include aluminium, alumina, copper, magnesium, brass, carbon such as carbon black and graphite, silicon nitride, aluminium nitride, boron nitride, zinc oxide, glass, mica, titanium oxide, and boron carbide. However, in order to produce a composition that has relatively high thermal conductivity values, a high amount of filler material (generally more than 50 weight %) must be loaded into the base polymer matrix. Such highly loaded polymer compositions generally suffer from inferior mechanical properties, e.g. increased brittleness and/or poor mouldability i.e. reduced flow properties, excluding these materials from certain applications.

Such thermally conductive polymer compositions are disclosed in US2003/022043A1. These compositions comprise 20-80% by weight of thermoplastic polymer and 20-80% by weight thermally conductive filler materials. More particular thermally conductive fillers comprise about 30 to 60% by weight of the composition. The thermally conductive filler include metals, metal oxides, ceramics such as boron nitride, and carbon materials such as carbon black and graphite. The polymer composition preferably has a thermal conductivity greater than 3 W/m·K, more preferably greater than 22 W/m·K. The polymer composition of US2003/022043A1 can be injection moulded or melt extruded into products with a planar structure, such as films. However, as is the case with many thermally conductive polymer compositions, when moulded into flat shaped articles, or into articles with flat shaped parts, the thermal conductive properties in through-plane direction are generally very low, much lower than in in-plane direction. Moreover, for obtaining a high in-plane thermal conductivity already high loadings of thermally conductive filler are needed. It has been observed by the inventors that for thermally conductive polymer compositions with for example with boron nitride or graphite or carbon pitch fibres, a loading of well above 20 wt.% or even above 30 wt.% is required to obtain an in-plane thermal conductivity of at least 3 W/m·K. Meanwhile, the through-plane thermal conductivity is still well below 3 W/m·K, more particular in several of the cases even below 1 W/m·K. The high loadings of thermally conductive filler needed for obtaining high thermal conductivity has a negative impact on the monarchical properties of the thermally conductive polymer compositions.

It is thus an object of the present invention to provide a new heat-processable thermally conductive polymer composition, and a process for its preparation. Compared to common thermally conductive polymer compositions of the prior art, e.g. those comprising boron nitride as filler material, the thermally conductive polymer composition should exhibit a relatively high thermal conductivity already at a relatively low weight percentage of filler material. The relatively low amounts of filler will result in reasonable mechanical properties of the polymer composition.

The object is met by the heat-processable thermally conductive polymer composition according to the invention, comprising

(a) 30 to 95 % by weight of a thermoplastic polymer selected from polyamides, polyesters, polyarylene sulfides, polyarylene oxides, polysulfones, polyarylates, polyimides, poly(ether ketone)s, polyetherimides, polycarbonates, copolymers of said polymers among each other and/or with other polymers, including thermoplastic elastomers, and mixtures of said polymers and copolymers;
(b) 5 to 40 % by weight of a graphite powder; and
(c) 0 to 65 % by weight of optional further component(s),

-   wherein all weight percentages being based on the total weight of the heat-processable thermally conductive polymer composition, and
-   wherein the particles of the graphite powder are in the form of platelets having a thickness of less than 500 nm.

This heat-processable thermally conductive polymer composition can be prepared with the process according to the invention, comprising steps of

-   melt mixing of a thermoplastic polymer, a conductive filler and optionally one or more further components, thereby forming a mixed homogenous melt, and

- cooling the mixed homogenous melt thereby obtaining the polymer composition in a solid form,

wherein thermoplastic polymer is selected from the polymers mentioned above, and wherein the thermally conductive filler comprises graphite powder comprising platelets having a thickness of less than 500 nm.

The characteristic feature of the graphite powder used in the present heat-processable thermally conductive polymer composition is the shape of its particles which are in the form of thin platelets. Platelets are herein understood to be particles having a flat shape with a large difference in the three dimensions such that the smallest dimension (the thickness) is much smaller than the size of the particles in the other two dimension (the length and the width). The platelets may consist of one or more individual graphite layers closely packed together.

The thickness (smallest dimension) of the platelets is less than 500 nm, preferably less than 200 nm, more preferably less than 100 nm, even more preferably less than 80 nm, and most preferably less than 50 nm. For the sake of clarity it is noted that the platelets do not need to have a flat structure. Due to the very low thickness these might be bended, curved or waved or deformed otherwise as well.

The thickness of the platelets can be determined by standard methods, such as by electron microscopy.

Where further herein the term graphite powder comprising platelets of less than 500 nm, if not indicated otherwise, this is intended to include the preferred embodiments of thinner platelets as well. This grahite powder will also be indicated as graphite powder in the form of thin platelets.

When used as a filler material the present graphite powder surprisingly imparts to a thermoplastic polymer a relatively high thermal conductivity already at a relatively low weight percentage of filler. It is sufficient to load the matrix polymer with 5 to 40 % by weight of the graphite powder, based on the total weight of the polymer composition, in order to obtain a polymer composition with reasonable thermal conductivity values. Preferably, the heat-processable thermally conductive polymer composition according to the present invention comprises 10 to 30 % by weight of the graphite powder, based on the total weight of the polymer composition. Due to the low amount of filler the present polymer composition has better flow and mechanical properties than most known thermally conductive polymer compositions requiring high amounts of filler in order to obtain reasonable conductivity values.

Typically, the graphite powder used in the present heat-processable thermally conductive polymer composition is characterized by a relatively high specific surface area in combination with a relatively large particle size. Preferably, the graphite powder has a BET specific surface area of at least 10 $m^2$/g and a particle size distribution characterized by a D(v, 0.9) of at least 50 $\mu$m. Normal graphite powders including powders of both synthetic graphites and natural graphites have either a high specific surface area in combination with a low particles size or vice versa a low specific surface area in combination with a large particles size.

The graphite powder used in the heat-processable thermally conductive polymer composition according to the present invention preferably has BET specific surface area of at least 10 $m^2$/g, more preferably at least 15 $m^2$/g, even more preferably at least 20 $m^2$/g, and most preferably at least 25 $m^2$/g. The BET specific surface area is determined according to ASTM D3037.

The present graphite powder preferably has a particle size distribution characterized by a D(v, 0.9) of at least 50 $\mu$m, more preferably at least 60 $\mu$m, even more preferably at least 70 $\mu$m, and most preferably at least 80 $\mu$m. In some embodiments, the particle size distribution is further characterized by a volume median diameter D(v, 0.5) of at least 20 $\mu$m, preferably at least 25 $\mu$m, more preferably at least 30 $\mu$m, and most preferably at least 35 $\mu$m. Moreover, the particle size distribution is usually characterized by a D(v, 0.1) of at least 6 $\mu$m, preferably at least 7 $\mu$m, more preferably at least 8 $\mu$m, and most preferably at least 9 $\mu$m. In one embodiment the graphite powder has a particle size distribution characterized by a D(v, 0.9) of at least 50 $\mu$m, a volume median diameter D(v, 0.5) of at least 20 $\mu$m, and a D(v, 0.1) of at least 6 $\mu$m. The particle size is not bound by a specific maximum limit, but in practice it will be limited by the minimum specific surface area required. The higher the minimum specific surface area the smaller the particles in general will be and also the smaller the maximum size of the particles.

D(v, 0.9), D(v, 0.5), and D(v, 0.1) are determined by laser diffraction using a Malvern Mastersizer.

Typically, the graphite powder has a xylene density in the range of 2.0 - 2.4, preferably 2.1 - 2.3 g/$cm^3$, more preferably 2.20 - 2.27 g/$cm^3$.

A graphite powder suitable as filler in the heat-processable thermally conductive polymer composition according to the present invention is available from TIMCAL Ltd., Bodio, Switzerland under the trade name TIMREX® BNB90.

The thermoplastic polymer being the matrix polymer of the heat-processable thermally conductive polymer composition of the present invention is selected from polyamides; polyesters; polyarylene sulfides such as polyphenylene sulfides; polyarylene oxides such as polyphenylene oxides; polysulfones; polyarylates; polyimides; poly(ether ketone)s such as polyetheretherketones; polyetherimides; polycarbonates, copolymers of said polymers among each other and/or with other polymers, including thermoplastic elastomers such as copolyetherester block copolymers, copolyesterester block copolymers, and copolyetheramide block copolymers; and mixtures of said polymers and copolymers. The thermoplastic polymer suitably is an amorphous, a semi-crystalline or a liquid crystalline polymer, an elastomer, or a combination thereof. Liquid crystal polymers are preferred due to their highly crystalline nature and ability to provide a good matrix for the filler material. Examples of liquid crystalline polymers include thermoplastic aromatic polyesters.

Preferably, the thermoplastic polymer is chosen from the group consisting of polyamides, polyesters, polyphenylene sulphides, polyphenylene oxides, polysulfones, polyarylates, polyimides, polyetheretherketones, and polyetherimides, and mixtures and copolymers thereof.

Suitable polyamides include both amorphous and semi-crystalline polyamides. Suitable polyamides are all the polyamides known to a person skilled in the art, comprising semi-crystalline and amorphous polyamides that are melt-processable. Examples of suitable polyamides according to the invention are aliphatic polyamides, for example PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-copolyamide, PA-6/12-copolyamide, PA-6/11-copolyamide, PA-6,6/11-copolyamide, PA-6,6/12-copolyamide, PA-6/6,10-copolyamide, PA-6,6/6,10-copolyamide, PA-4,6/6-copolyamide, PA-6/6,6/6,10-terpolyamide, and copolyamides obtained from 1,4-cyclohexanedicarboxylic acid and 2,2,4- and 2,4,4-trimethylhexamethylenediamine, aromatic polyamides, for example PA-6,1, PA-6,1/6,6-copolyamide, PA-6,T, PA-6,T/6-copolyamide, PA-6,T/6,6-copolyamide, PA-6,1/6,T-copolyamide, PA-6,6/6,T/6,1-copolyamide, PA-6,T/2-MPMDT-copolyamide (2-MPMDT = 2-methylpentamethylene diamine), PA-9,T, copolyamides obtained from terephthalic acid, 2,2,4- and 2,4,4-trimethylhexamethylenediamine, copolyamide obtained from isophthalic acid, laurinlactam and 3,5-dimethyl-4,4-diaminodicyclohexylmethane, copolyamides obtained from isophthalic acid, azelaic acid and/or sebacic acid and 4,4-diaminodicyclohexylmethane, copolyamides obtained from caprolactam, isophthalic acid and/or terephthalic acid and 4,4-diaminodicyclohexylmethane, copolyamides obtained from caprolactam, isophthalic acid and/or terephthalic acid and isophoronediamine, copolyamides obtained from isophthalic acid and/or terephthalic acid and/or other aromatic or aliphatic dicarboxylic acids, optionally alkylsubstituted hexamethylenediamine and alkyl-substituted 4,4-diaminodicyclohexylamine, and also copolyamides and mixtures of the aforementioned polyamides.

More preferably, the thermoplastic polymer comprises a semi-crystalline polyamide. Semi-crystalline polyamides have the advantage of having good thermal properties and mould filling characteristics. Also still more preferably, the thermoplastic polymer comprises a semi-crystalline polyamide with a melting point of at least 200°C, more preferably at least 220°C, 240°C, or even 260 °C and most preferably at least 280°C. Semi-crystalline polyamides with a higher melting point have the advantage that the thermal properties are further improved. With the term melting point is herein understood the temperature measured by DSC with a heating rate of 5°C falling in the melting range and showing the highest melting rate. Preferably a semi-crystalline polyamide is chosen from the group comprising PA-6, PA-6,6, PA-6,10, PA-4,6, PA-11, PA-12, PA-12,12, PA-6,1, PA-6,T, PA-6,T/6,6-copolyamide, PA-6,T/6-copolyamide, PA-6/6,6-copolyamide, PA-6,6/6,T/6,1-copolyamide, PA-6,T/2-MPMDT- copolyamide, PA-9,T, PA-4,6/6-copolyamide and mixtures and copolyamides of the aforementioned polyamides. More preferably PA-6,1, PA-6,T, PA-6,6, PA-6,6/6T, PA-6,6/6,T/6,1-copolyamide, PA-6,T/2-MPMDT- copolyamide, PA-9,T or PA-4,6, or a mixture or copolyamide thereof, is chosen as the polyamide. Still more preferably, the semi-crystalline polyamide comprises PA-4,6, or a copolyamide thereof.

The heat-processable thermally conductive polymer composition according to the present invention may comprise 0 to 65 % by weight of optional further component(s), also denoted herein as additives. Preferably, the total amount of optional further components, if any, is in the range of 0-40 % by weight. Herein, the weight percentages are based on the total weight of the heat-processable thermally conductive polymer composition.

As additives, the polymer composition may comprise any auxiliary additives, known to a person skilled in the art that are customarily used in polymer compositions. Preferably, these other additives should not detract, or not in a significant extent, from the invention. Such additives include, in particular, additional thermally conductive fillers next to the above specified graphite powder; other fillers not considered thermally conductive such as non-conductive reinforcing fillers; pigments; dispersing aids; processing aids for example lubricants and mould release agents; impact modifiers; plasticizers; crystallization accelerating agents; nucleating agents; flame retardants; UV stabilizers; antioxidants; and heat stabilizers.

A "thermally conductive filler" within the meaning of the present invention includes any material that can be dispersed in the thermoplastic polymer and that improves the heat conductivity of the thermoplastic composition. The thermally conductive filler material has an intrinsic thermal conductivity of at least 5 W/m·K, preferably at least 10 W/m·K. Non-limiting examples of additional thermally conductive filler include boron nitride, silicon nitride, aluminium nitride, alumina, calcium oxide, titanium oxide, zinc oxide, carbon materials such as graphite being different from the above specified graphite powder, carbon black, carbon fibres e.g. pitch and pan based carbon fibres, ceramic fibres and metals such as aluminium, copper, magnesium, brass. The particles of the additional thermally conductive filler may have any shape, for example they may be in the form of spheres, ellipsoids, platelets, strands, polyhedra, and fibres including whiskers. Mixtures of different additional filler materials and shapes may also be used. When a graphite different from the above specified graphite powder is used as additional thermally conductive filler in the heat-processable thermally conductive polymer composition according to the present invention, the weight ratio of the above specified graphite powder to graphite different from the above specified graphite powder is preferably greater than 1:1 and more preferably greater than 2:1.

In a preferred embodiment of the invention, wherein the heat-processable thermally conductive polymer composition optionally comprises one or more additional thermally conductive fillers, the total amount of graphite powder in the form of platelets having a thickness of less than 500 nm and additional thermally conductive fillers is in the range of 5 to 40 % by weight relative to the total weight of the polymer composition, and the graphite powder in the form of platelets having a thickness of less than 500 nm is present in an amount of at least 50 wt.%, more preferably at least 75 wt.% relative to the total weight of graphite powder and the additional thermally conductive fillers.

In particular, the non-conductive fillers that may be used as additives in the heat-processable thermally conductive polymer composition according to the present invention include non-conductive inorganic fillers. Suitable for use as non-conductive inorganic fillers are all the fillers, such as reinforcing and extending fillers, known to a person skilled in the art, for example asbestos, mica, clay, calcinated clay, talcum, silicates such as wollastonite, and silicon dioxide, especially glass fibres. In this context, "not thermally conductive" or "non-conductive" is used to describe filler materials having an intrinsic thermal conductivity of less than 5 W/m·K in order to differentiate these materials from those thermally conductive filler materials described in the paragraph above. It is understood that various of those thermally conductive filler materials also have some reinforcing effect. However, their thermal conductivity classifies them as thermally conductive fillers within the meaning of the present invention.

In one preferred embodiment the heat-processable thermally conductive polymer composition comprises glass fibres, typically 10 to 40 % by weight of glass fibres, based on the total weight of the polymer composition including filler and further optional components.

Typically, the heat-processable thermally conductive polymer composition according to the present invention has a through-plane thermal conductivity of 0.5 to 10 W/m·K, preferably 1 to 5 W/m·K, and more preferably 1.5 to 2.5 W/m·K. Typically, the heat-processable thermally conductive polymer composition has a parallel thermal conductivity of 2 to 50 W/m·K, preferably 3 to 40 W/m·K, and more preferably 4 to 25 W/m·K. Herein the thermal conductivity is derived from the thermal diffusivity (D) measured by laser flash technology according to ASTM E1461-01 on injection moulded samples of 80x80x2 mm in through plane respectively in-plane direction, the bulk density (p) and the specific heat (Cp), at 20°C, using the method described in Polymer Testing (2005, 628-634).

The thermal conductivity of a plastic composition is herein understood to be a material property, which can be orientation dependent and which also depends on the history of the composition. For determining the thermal conductivity of a plastic composition, that material has to be shaped into a shape suitable for performing thermal conductivity measurements. Depending on the composition of the plastic composition, the type of shape used for the measurements, the shaping process as well as the conditions applied in the shaping process, the plastic composition may show an isotropic thermal conductivity or an anisotropic, i.e. orientation dependent thermal conductivity. In case the plastic composition is shaped into a flat rectangular shape, the orientation dependent thermal conductivity can generally be described with three parameters: $\Lambda_\perp$, $\Lambda_{//}$ and $\Lambda_\pm$, wherein $\Lambda_\perp$ is the through-plane thermal conductivity, $\wedge_{//}$ is the in-plane thermal conductivity in the direction of maximum in-plane thermal conductivity, also indicated herein as parallel or longitudinal thermal conductivity and $\wedge_\pm$ is the in-plane thermal conductivity in the direction of minimum in-plane thermal conductivity. It is noted that the through-plane thermal conductivity is indicated elsewhere also as "transversal" thermal conductivity.

In case of a polymer composition with a dominant parallel orientation of plate-like particles in plane with the planar orientation of the plate, the polymer composition may show an isotropic in-plane thermal conductivity, i.e. $\wedge_{//}$ is approximately equal to $\wedge_\pm$.

For measurement of $\Lambda_\perp$ and $\Lambda_{//}$ samples with dimensions of 80 x 80 x 2 mm were prepared from the material to be tested by injection moulding using an injection moulding machine equipped with a square mould with the proper dimensions and a film gate of 80 mm wide and 2 mm high positioned at one side of the square. Of the 2 mm thick injection moulded plaques the thermal diffusivity D, the density (p) and the heat capacity (Cp) were determined. The thermal diffusivity was determined in a direction in-plane and parallel ($D_{//}$) to the direction of polymer flow upon mould filling, as well as through plane ($D_\perp$), according to ASTM E1461-01 with Netzsch LFA 447 laserflash equipment. The in-plane thermal diffusivity $D_{//}$ was determined by first cutting small strips or bars with an identical width of about 2 mm wide from the plaques. The length of the bars was in the direction perpendicular to the polymer flow upon mould filling. Several of these bars were stacked with the cut surfaces facing outwards and clamped very tightly together. The thermal diffusivity was measured through the stack from one side of the stack formed by an array of cut surfaces to the other side of the stack with cut surfaces.

The heat capacity (Cp) of the plates was determined by comparison to a reference sample with a known heat capacity (Pyroceram 9606), using the same Netzsch LFA 447 laserflash equipment and employing the procedure described by W. Nunes dos Santos, P. Mummery and A. Wallwork, Polymer Testing 14 (2005), 628-634. From the thermal diffusivity (D), the density (p) and the heat capacity (Cp), the thermal conductivity of the moulded plaques was determined in a direction parallel ($\wedge_{//}$) to the direction of polymer flow upon mold filling, as well as perpendicular to the plane of the plaques ($\wedge_\perp$), according to formula:

$$\Lambda_x = D_x * \rho * Cp$$

wherein x = // and ⊥, respectively.

The heat-processable thermally conductive polymer composition according to the invention has a high thermal conductivity and good mechanical properties, which can vary over a wide range depending on the amount of the graphite powder in the form of thin platelets, and optionally additional thermally conductive fillers therein. Due to the graphite powder in the form of thin platelets, already at very low total amount of thermally conductive filler, reasonably high thermal conductivities are obtained, which with many other thermally conductive fillers are reached at much higher contents and at the cost of mechanical properties. At higher total amounts of thermally conductive filler much higher thermal conductivities are obtained compared to other thermally conductive fillers when used in similar amounts.

In preferred embodiments of the invention, the heat-processable thermally conductive polymer composition comprises:

- 5 up to 20 wt.% of thermally conductive filler, and having a parallel thermal conductivity of at least at least 3 W/m·K, preferably in the range 4-6 W/m·K, and/or a through-plane thermal conductivity of at least 0.8 W/m·K, preferably at least 1.0 W/m·K, more preferably in the range 1.2-1.6 W/m·K; or
- 20 up to 30 wt.% of thermally conductive filler, and having parallel thermal conductivity of at least 5 W/m·K, preferably at least 6 W/m·K, more preferably in the range 7- 15 W/m·K and/or a through-plane thermal conductivity of at least 1.2, preferably at least 1.3 W/m·K, more preferably in the range 1.4-2.0 W/m·K; or
- 30 up to 40 wt.% of thermally conductive filler, and having a parallel thermal conductivity of at least 8 W/m·K, preferably at least 10 W/m·K, more preferably in the range 12 - 20 W/m·K and/or a through-plane thermal conductivity of at least 1.2 W/m·K, preferably at least 1.3 W/m·K, more preferably in the range 1.4-2.5 W/m·K,

wherein the weight percentages refer to the total amount of the graphite powder in the form of thin platelets and optionally additional thermally conductive fillers are relative to the total weight of the polymer composition.

As already pointed out above, the thermally conductive polymer composition according to the present invention generally has good flow properties ensuring a good heat-processability. Preferably, the heat-processable thermally conductive polymer composition has a spiral flow length of at least 40 mm, more preferably at least 70 mm and most preferably at least 100 mm. The spiral flow length is determined by injecting the molten thermoplastic material into a long spiral-channel cavity having dimensions 280 x 15 x 1 mm and the length of the resulting flow for that material is its spiral flow length. The material is injected by using a 22 mm Engel 45B L/d = 19 injection moulding machine having a theoretical shot volume of 38 cm³; the cylinder temperature is 10°C above the melting point of the main polymer component, and the effective injection pressure is 100 MPa.

The heat-processable thermally conductive polymer composition according to the present invention is further characterized by a reasonable mechanical performance. Typically, the thermally conductive polymer has a tensile strength of at least 40 MPa, preferably at least 50 MPa and more preferably at least 60 MPa. Typically, the heat-processable thermally conductive polymer composition has an elongation at break of at least 0.7 %, preferably at least 1.0 %, more preferably at least 1.5 %, and most preferably at least 2.0 %. Typically, the heat-processable thermally conductive polymer composition has a stiffness of at least 4,000 MPa, more preferably at least 6,000 MPa. Tensile modulus, tensile strength and elongation at break are determined at 23°C and 5 mm/min according to ISO 527; the dried granulate of the thermoplastic material to be tested was injection moulded to form the test bars for the tensile tests having a thickness of 4 mm conforming to ISO 527 type 1A.

The heat-processable thermally conductive polymer composition according to the present invention may be prepared by mixing the thermoplastic polymer, the graphite powder and further optional component(s) in an extruder as it is well known to the person skilled in the art.

Preferably, the process comprising steps, following the melt mixing, of

- extruding the melt through one or more orifices to form an extruded strand or strands;
- cutting the extruded strand or strands, to form pellets,
- and cooling the pellets, thereby forming solid pellets.

The advantage of cutting the strands prior to cooling, is that this allows the thermally conductive polymer composition to be obtained in pellets. In case of cooling prior to cutting, in particular with somewhat higher contents of the graphite powder in the form of thin platelets, curtting of the material might have become very hard, and a powdered material rather than pellts are obtained. Pellets are preferred in most cases for further processing, such as in injection moulding.

Typically, the extruded polymer composition is converted to pellets by using a water-ring pelletizer. In this case the polymer composition is extruded through the orifices in a die-plate and is cut immediately after leaving the die by cutting blades, cooled and optionally grinded to reduce the particle size. The so or otherwise prepared pellets may be further processed into the desired shape by any known method suitable for processing thermoplastic materials. Preferably, the heat-processable thermally conductive polymer composition according to the present invention is processed by injection moulding.

The heat-processable thermally conductive polymer composition may for example be used in components of an electrical or electronic assembly or in engine parts. In particular, the present thermally conductive polymer composition may be used in heat sinks.

The invention is further illustrated by the following examples and comparative experiments.

EXAMPLES

Moulding compositions according to the present invention were prepared from polyamide-46 and varying amounts of graphite powder TIMREX® BNB90 (denoted as BNB), available from TIMCAL Ltd., Bodio, Switzerland, in a Berstorff ZE25-48D co-rotatign twin screw extruder. The temperature settings of the extruder were such that the melt temperature at the exit of the extruder was typically 320°C.

As comparative examples moulding compositions were prepared from polyamide-46 and varying amounts of synthetic graphite TIMREX® KS44 (denoted as KS44), available from TIMCAL Ltd., Bodio, Switzerland; carbon pitch fibers Dialead® K223QG (denoted as CPF), available from Mitsubishi Chemical Corporation; and boron nitride PolarTherm® PT100 (denoted as BN), available from Momentive Performance Materials, Inc. (formerly GE Advanced Ceramics), respectively, in an extruder using a standard melt compounding process. The reference example is polyamide-46 without any filler.

Specification of TIMREX® BNB90: BET specific surface area = 28.4 $m^2$/g; D(v, 0.9) = 85.2 $\mu$m, D(v, 0.5) = 36.1 $\mu$m, D(v, 0.1) = 10.0 $\mu$m.

Specification of TIMREX® KS44: BET specific surface area = 9 $m^2$/g; D(v, 0.9) = 45.4 $\mu$m, D(v, 0.5) = 18.6 $\mu$m, D(v, 0.1) = 4.9 $\mu$m.

The formulation of the moulding compositions is shown in Table 1. The weight percentages of the filler materials are based on the total weight of the polymer composition, the remainder adding up to 100 % being polyamide-46.

Test samples with dimensions of 80 x 80 x 2 mm were prepared from the moulding compositions by injection moulding using an injection moulding machine equipped with a square mould with the proper dimensions and a film gate of 80 mm wide and 2 mm high positioned at one side of the square. Of the 2 mm thick injection moulded plaques the thermal diffusivities in a direction in-plane and parallel ($D_{//}$) to the direction of polymer flow upon mould filling and through plane ($D_\perp$), the density (p) and the heat capacity (Cp) were determined as described in the general part of the description and the thermal conductivity in a direction parallel ($\wedge_{//}$) and perpendicular to the plane of the plaques ($\wedge_\perp$) was calculated.

Elongation at break was determined at 23°C and 5 mm/min according to ISO 527.

Table 1: Composition (amount of heat conductive component in weight percentages, relative to the total weight of the composition), thermal conductivity (W/m·K) in and mechanical properties (E-a-b = elongation at break, in %) of moulding compositions of Examples 1-2 and Comparative Experiments A-J.

|  | BNB | KS44 | CPF | BN | $\wedge_\perp$ | $\wedge_{//}$ | E-a-b |
|---|---|---|---|---|---|---|---|
| Reference |  |  |  |  | 0.3 | 0.3 |  |
| Ex. 1 | 15 |  |  |  | 1.41 | 3.2 | 2.7 |
| Ex. 2 | 30 |  |  |  | 1.74 | 13.3 | 1.2 |
| Comp. Exp. A |  | 15 |  |  | 0.46 | 0.8 | 4.7 |
| Comp. Exp. B |  | 30 |  |  | 1.02 | 2.6 | 2.0 |
| Comp. Exp. C |  |  | 15 |  | 0.5 | 2.1 | 3.1 |
| Comp. Exp. D |  |  | 30 |  | 0.6 | 4.1 | 1.7 |

(continued)

|  | BNB | KS44 | CPF | BN | $\wedge_\perp$ | $\wedge_{//}$ | E-a-b |
|---|---|---|---|---|---|---|---|
| Comp. Exp. E |  |  | 45 |  | 0.9 | 6.0 | 1.1 |
| Comp. Exp. F |  |  | 60 |  | 1.1 | 8.2 | 0.7 |
| Comp. Exp. G |  |  |  | 15 | 0.5 | 1.4 | 3.1 |
| Comp. Exp. H |  |  |  | 30 | 0.7 | 3.6 | 2.1 |
| Comp. Exp. I |  |  |  | 45 | 0.9 | 7.8 | 0.7 |
| Comp. Exp. J |  |  |  | 60 | 1.5 | 13.5 | 0.4 |

As can be seen from this table, the comparative examples with 15 wt.% thermally conductive filler exhibit an in-plane parallel thermal conductivity far below 3 W/m·K, while this level is only reached with an amount of thermally conductive filler around 30 wt.%. To obtain much higher in-plane parallel thermal conductivities, e.g. above 10 W/m·K the amount of thermally conductive filler has to be as high as 60% or even higher, which has a detrimental effect on the mechanical properties as exhibited by the elongation at break. Meanwhile the through plane thermal conductivities remain still very low.

It is immediately evident from Table 1 that the heat-processable thermally conductive polymer compositions of the present invention (Ex. 1 and 2) exhibit the highest conductivity values at the relatively low filler amounts of 15 and 30 % by weight. Thus, only the heat-processable thermally conductive polymer compositions of the present invention show the unique combination of high conductivity and reasonable elongation at break; the prior art polymer composition are all either less thermally conductive or have a lower elongation at break.

The following examples and comparative experiments show the effect of further increasing the amount of graphite powder comprising the thin platelets or combining the graphite powder comprising the thin platelets with another thermally conductive filler, in this case KS44, or adding glass fibres (GFR).

Table 2: Composition (amount of heat conductive component and glass fibres in weight percentages, relative to the total weight of the composition), thermal conductivity (W/m·K) in and mechanical properties (E-a-b = elongation at break, in %) of moulding compositions of Examples 3-8 and Comparative Experiment K.

|  | BNB | KS44 | GFR | $\wedge_\perp$ | $\wedge_{//}$ | Mech. Properties |
|---|---|---|---|---|---|---|
| Ex. 3 | 45 |  |  | 2.52 | 22.6 | +/- |
| Ex. 4 | 60 |  |  | 4.45 | 34.4 | - |
| Ex. 5 | 15 | 15 |  | 1.5 | 7.53 | + |
| Ex. 6 | 15 | 30 |  | 2.3 | 10.5 | +/- |
| Ex. 7 | 30 | 15 |  | 3.2 | 16.6 | +/- |
| Ex. 8 | 30 |  | 15 | 2.2 | 14.3 | ++ |
| Comp. Exp. K |  | 45 |  | 1.64 | 7.5 | +/- |

The results show that the compositions according to the invention comprising the graphite powder comprising the thin platelets are much more effective in increasing the thermal conductivity at the same high amounts. If needed the thermal conductivity both in-plane as well as through plane, can be further increased by adding additional thermally conductive filler, but also here the graphite powder comprising the thin platelets is much more effective than the other thermally conductive filler, in this case KS44. Since the compositions according to the invention exhibit very good thermal conductivity properties already at relatively low amounts of thermally conductive filler, other fillers or reinforcing agents, in particular glass fibres, can be added to further increase the mechanical properties, meanwhile retaining the very good thermal conductivity properties. This is illustrated with the results of Example 8.

**Claims**

1.  Process for preparing a heat-processable thermally conductive polymer composition according to claim 6, comprising steps of

    - melt mixing of a thermoplastic polymer, a thermally conductive filler and optionally one or more further components, thereby forming a mixed homogenous melt, and
    - cooling the mixed homogenous melt thereby obtaining the polymer composition in a solid form,

    wherein thermoplastic polymer is selected from polyamides, polyesters, polyarylene sulfides, polyarylene oxides, polysulfones, polyarylates, polyimides, poly(ether ketone)s, polyetherimides, polycarbonates, copolymers of said polymers among each other and/or with other polymers, including thermoplastic elastomers, and mixtures of said polymers and copolymers, and
    wherein the thermally conductive filler comprises graphite powder comprising platelets having a thickness of less than 500 nm, and wherein the graphite powder has a BET specific surface area, determined by the method according to ASTM D3037, of at least 10 $m^2$/g and a particle size distribution **characterized by** a D(v, 0.9) of at least 50 $\mu$m as determined by laser diffraction.

2.  Process according to claim 1, wherein the graphite powder in the form of platelets having a thickness of less than 500 nm is present in an amount of 5 to 40 % by weight, relative to the total weight of the polymer composition.

3.  Process according to claim 1 or 2, wherein the thermally conductive filler is present in a total amount of 5 to 40 % by weight, relative to the total weight of the polymer composition, and comprises at least 50 wt.% of the graphite powder in the form of platelets having a thickness of less than 500 nm, relative to the total weight of the thermally conductive filler.

4.  Process according to any of claims 1-3, wherein the thermally conductive filler is present in a total amount of 5 to 40 % by weight, relative to the total weight of the polymer composition, and comprises at least 75 wt.% of the graphite powder in the form of platelets having a thickness of less than 500 nm, relative to the total weight of the thermally conductive filler.

5.  Process according to any of claims 1-4, comprising steps, following the melt mixing, of

    - extruding the melt through one or more orifices to form an extruded strand or strands;
    - cutting the extruded strand or strands, to form pellets,
    - and cooling the pellets, thereby forming solid pellets.

6.  Heat-processable thermally conductive polymer composition comprising

    (a) 30 to 95 % by weight of a thermoplastic polymer selected from polyamides, polyesters, polyarylene sulfides, polyarylene oxides, polysulfones, polyarylates, polyimides, poly(ether ketone)s, polyetherimides, polycarbonates, copolymers of said polymers among each other and/or with other polymers, including thermoplastic elastomers, and mixtures of said polymers and copolymers; and
    (b) 5 to 40 % by weight of a graphite powder in the form of platelets having a thickness of less than 500 nm and wherein the graphite powder has a BET specific surface area, determined by the method according to ASTM D3037, of at least 10 $m^2$/g and a particle size distribution **characterized by** a D(v, 0.9) of at least 50 $\mu$m as determined by laser diffraction;

    wherein the weight percentages are relative to the total weight of the polymer composition.

7.  Heat-processable thermally conductive polymer composition according to claim 6, obtainable by a process according to any of claims 1-5.

8.  Heat-processable thermally conductive polymer composition according to claim 6 or 7 , consisting of

(b) 30 to 95 % by weight of the thermoplastic polymer;

(c) 5 to 40 % by weight of the graphite powder in the form of platelets having a thickness of less than 500 nm; and

(d) 0 to 40 % by weight of one or more further components.

9. Heat-processable thermally conductive polymer composition according to any of claims 6-8, wherein the thermoplastic material comprises a polyamide.

10. Heat-processable thermally conductive polymer composition according to any of claims 6-9, comprising 10 to 40 % by weight of glass fibers, relative to the total weight of the polymer composition.

11. Heat-processable thermally conductive polymer composition according to any of claims 6-10 , optionally comprising one or more additional thermally conductive fillers, wherein the total amount of graphite powder in the form of platelets having a thickness of less than 500 nm and additional thermally conductive fillers is in the range of 5 to 40 % by weight relative to the total weight of the polymer composition, and the graphite powder in the form of platelets having a thickness of less than 500 nm is present in an amount of at least 50 wt.% relative to the total weight of graphite powder and the additional thermally conductive fillers.

12. Heat-processable thermally conductive polymer composition according to any of claims 6-11, having an in-plane parallel thermal conductivity of 2 to 50 W/m·K and/or a

through-plane thermal conductivity of 0.5 to 10 W/m·K, wherein the thermal conductivity is derived from the thermal diffusivity (D) measured by laser flashtechnology according to ASTM E1461-01 on injection moulded samples of 80x80x2 mm in in-plane respectively through plane direction, the bulk density (p) and the specific heat (Cp), at 20°C, using the method described in Polymer Testing (2005, 628-634).

13. Heat-processable thermally conductive polymer composition according to claim 12 , wherein the composition comprises:

- 5 up to 20 wt.% of thermally conductive filler, and having a parallel thermal conductivity of at least at least 3 W/m·K and/or a through-plane thermal conductivity of at least 0.8 W/m·K; or
- 20 up to 30 wt.% of thermally conductive filler, and having parallel thermal conductivity of at least 5 W/m·K, and/or a through-plane thermal conductivity of at least 1.2; or
- 30 up to 40 wt.% of thermally conductive filler, and having a parallel thermal conductivity of at least 8 W/m·K, and/or a through-plane thermal conductivity of at least 1.2 W/m·K;

wherein the weight percentages are relative to the total weight of the polymer composition.

14. Use of the heat-processable thermally conductive polymer composition according to any of claims 6 -13 in a component of an electrical or electronic assembly or in an engine part or in a heat exchanger.

**Patentansprüche**

1. Verfahren zur Herstellung einer wärmeverarbeitbaren wärmeleitfähigen Polymerzusammensetzung nach Anspruch 6, bei dem man

- ein thermoplastisches Polymer, einen wärmeleitfähigen Füllstoff und gegebenenfalls eine oder mehrere weitere Komponenten in der Schmelze mischt, wodurch eine gemischte homogene Schmelze gebildet wird, und
- die gemischte homogene Schmelze abkühlt, wodurch man die Polymerzusammensetzung in fester Form erhält,

wobei das thermoplastische Polymer aus Polyamiden, Polyestern, Polyarylensulfiden, Polyarylenoxiden, Polysulfonen, Polyarylaten, Polyimiden, Poly-(etherketon)en, Polyetherimiden, Polycarbonaten, Copolymeren der Polymere miteinander und/oder mit anderen Polymeren einschließlich thermoplastischen Elastomeren und Mischungen der Polymere und Copolymere ausgewählt ist und

wobei der wärmeleitfähige Füllstoff Graphitpulver, umfassend Plättchen mit einer Dicke von weniger als 500 nm, umfasst und wobei das Graphitpulver eine nach der Methode gemäß ASTM D3037 bestimmte spezifische BET-Oberfläche von mindestens 10 m$^2$/g und eine durch Laserbeugung bestimmte Teilchengrößenverteilung, die durch ein D(v, 0,9) von mindestens 50 $\mu$m gekennzeichnet ist, aufweist.

**2.** Verfahren nach Anspruch 1, bei dem das Graphitpulver in Form von Plättchen mit einer Dicke von weniger als 500 nm in einer Menge von 5 bis 40 Gew.-%, bezogen auf das Gesamtgewicht der Polymerzusammensetzung, vorliegt.

**3.** Verfahren nach Anspruch 1 oder 2, bei dem der wärmeleitfähige Füllstoff in einer Gesamtmenge von 5 bis 40 Gew.-%, bezogen auf das Gesamtgewicht der Polymerzusammensetzung, vorliegt und mindestens 50 Gew.-% des Graphitpulvers in Form von Plättchen mit einer Dicke von weniger als 500 nm, bezogen auf das Gesamtgewicht des wärmeleitfähigen Füllstoffs, umfasst.

**4.** Verfahren nach einem der Ansprüche 1-3, bei dem der wärmeleitfähige Füllstoff in einer Gesamtmenge von 5 bis 40 Gew.-%, bezogen auf das Gesamtgewicht der Polymerzusammensetzung, vorliegt und mindestens 75 Gew.-% des Graphitpulvers in Form von Plättchen mit einer Dicke von weniger als 500 nm, bezogen auf das Gesamtgewicht des wärmeleitfähigen Füllstoffs, umfasst.

**5.** Verfahren nach einem der Ansprüche 1-4, bei dem man nach dem Mischen in der Schmelze

- die Schmelze durch eine oder mehrere Öffnungen zu einem extrudierten Strang bzw. extrudierten Strängen extrudiert,
- den extrudierten Strang bzw. die extrudierten Stränge zu Pellets schneidet
- und die Pellets abkühlt, wodurch feste Pellets gebildet werden.

**6.** Wärmeverarbeitbare wärmeleitfähige Polymerzusammensetzung, umfassend

(a) 30 bis 95 Gew.-% eines thermoplastischen Polymers, das aus Polyamiden, Polyestern, Polyarylensulfiden, Polyarylenoxiden, Polysulfonen, Polyarylaten, Polyimiden, Poly-(etherketon)en, Polyetherimiden, Polycarbonaten, Copolymeren der Polymere miteinander und/oder mit anderen Polymeren einschließlich thermoplastischen Elastomeren und Mischungen der Polymere und Copolymere ausgewählt ist; und
(b) 5 bis 40 Gew.-% eines Graphitpulvers in Form von Plättchen mit einer Dicke von weniger als 500 nm, wobei das Graphitpulver eine nach der Methode gemäß ASTM D3037 bestimmte spezifische BET-Oberfläche von mindestens 10 m$^2$/g und eine durch Laserbeugung bestimmte Teilchengrößenverteilung, die durch ein D(v, 0,9) von mindestens 50 $\mu$m gekennzeichnet ist, aufweist;

wobei sich die Gewichtsprozentanteile auf das Gesamtgewicht der Polymerzusammensetzung beziehen.

**7.** Wärmeverarbeitbare wärmeleitfähige Polymerzusammensetzung nach Anspruch 6, die durch ein Verfahren nach einem der Ansprüche 1-5 erhältlich ist.

**8.** Wärmeverarbeitbare wärmeleitfähige Polymerzusammensetzung nach Anspruch 6 oder 7, bestehend aus

(b) 30 bis 95 Gew.-% des thermoplastischen Polymers;
(c) 5 bis 40 Gew.-% des Graphitpulvers in Form von Plättchen mit einer Dicke von weniger als 500 nm; und
(d) 0 bis 40 Gew.-% einer oder mehrerer weiterer Komponenten.

**9.** Wärmeverarbeitbare wärmeleitfähige Polymerzusammensetzung nach einem der Ansprüche 6-8, wobei das thermoplastische Material ein Polyamid umfasst.

**10.** Wärmeverarbeitbare wärmeleitfähige Polymerzusammensetzung nach einem der Ansprüche 6-9, umfassend 10 bis 40 Gew.-% Glasfasern, bezogen auf das Gesamtgewicht der Polymerzusammensetzung.

**11.** Wärmeverarbeitbare wärmeleitfähige Polymerzusammensetzung nach einem der Ansprüche 6-10, gegebenenfalls umfassend einen oder mehrere zusätzliche wärmeleitfähige Füllstoffe, wobei die Gesamtmenge an Graphitpulver in Form von Plättchen mit einer Dicke von weniger als 500 nm und zusätzlichen wärmeleitfähigen Füllstoffen im Bereich von 5 bis 40 Gew.-%, bezogen auf das Gesamtgewicht der Polymerzusammensetzung, liegt und das Graphitpulver in Form von Plättchen mit einer Dicke von weniger als 500 nm in einer Menge von mindestens 50 Gew.-%, bezogen auf das Gesamtgewicht von Graphitpulver und den zusätzlichen wärmeleitfähigen Füllstoffen, vorliegt.

**12.** Wärmeverarbeitbare wärmeleitfähige Polymerzusammensetzung nach einem der Ansprüche 6-11 mit einer in-plane-Parallelwärmeleitfähigkeit von 2 bis 50 W/m·K und/oder einer through-plane-Wärmeleitfähigkeit von 0,5 bis 10 W/m·K, wobei die Wärmeleitfähigkeit aus der durch Laser-Flashtechnik gemäß ASTM E1461-01 an spritzgegossenen Proben mit den Abmessungen 80 x 80 x 2 mm in in-plane- bzw. through-plane-Richtung gemessenen Temperaturleitzahl (D), der Schüttdichte (p) und der spezifischen Wärmekapazität (Cp) bei 20°C nach der Methode gemäß Polymer Testing (2005, 628-634) abgeleitet wird.

13. Wärmeverarbeitbare wärmeleitfähige Polymerzusammensetzung nach Anspruch 12, wobei die Zusammensetzung Folgendes umfasst:

- 5 bis 20 Gew.-% wärmeleitfähigen Füllstoff, und eine Parallelwärmeleitfähigkeit von mindestens 3 W/m·K und/oder eine through-plane-Wärmeleitfähigkeit von mindestens 0,8 W/m·K aufweist; oder
- 20 bis 30 Gew.-% wärmeleitfähigen Füllstoff, und eine Parallelwärmeleitfähigkeit von mindestens 5 W/m·K und/oder eine through-plane-Wärmeleitfähigkeit von mindestens 1,2 W/m·K aufweist; oder
- 30 bis 40 Gew.-% wärmeleitfähigen Füllstoff, und eine Parallelwärmeleitfähigkeit von mindestens 8 W/m·K und/oder eine through-plane-Wärmeleitfähigkeit von mindestens 1,2 W/m·K aufweist;

wobei sich die Gewichtsprozentanteile auf das Gesamtgewicht der Polymerzusammensetzung beziehen.

14. Verwendung der wärmeverarbeitbaren wärmeleitfähigen Polymerzusammensetzung nach einem der Ansprüche 6-13 in einer Komponente einer elektrischen oder elektronischen Baugruppe oder in einem Motorteil oder in einem Wärmetauscher.

## Revendications

1. Procédé de préparation d'une composition polymère thermoconductrice transformable à chaud selon la revendication 6, comprenant les étapes consistant à :

- mélanger à l'état fondu un polymère thermoplastique, une charge thermoconductrice et éventuellement un ou plusieurs autres composants pour former ainsi une masse fondue mélangée homogène, et
- refroidir la masse fondue mélangée homogène pour obtenir ainsi la composition polymère sous forme solide,

dans lequel le polymère thermoplastique est choisi parmi les polyamides, les polyesters, les sulfures de polyarylène, les oxydes de polyarylène, les polysulfones, les polyarylates, les polyimides, les polyéthercétones, les polyétherimides, les polycarbonates, les copolymères desdits polymères les uns avec les autres et/ou avec d'autres polymères, y compris les élastomères thermoplastiques, et les mélanges desdits polymères et copolymères, et dans lequel la charge thermoconductrice comprend une poudre de graphite comprenant des plaquettes ayant une épaisseur inférieure à 500 nm, la poudre de graphite ayant une surface spécifique BET, déterminée par la méthode selon ASTM D3037, d'au moins 10 m$^2$/g et une distribution de taille de particules **caractérisée par** un D(v, 0,9) d'au moins 50 $\mu$m telle que déterminée par diffraction laser.

2. Procédé selon la revendication 1, dans lequel la poudre de graphite sous forme de plaquettes ayant une épaisseur inférieure à 500 nm est présente dans une quantité de 5 à 40 % en poids, rapporté au poids total de la composition polymère.

3. Procédé selon la revendication 1 ou 2, dans lequel la charge thermoconductrice est présente dans une quantité totale de 5 à 40 % en poids, rapporté au poids total de la composition polymère, et comprend au moins 50 % en poids de la poudre de graphite sous forme de plaquettes ayant une épaisseur inférieure à 500 nm, rapporté au poids total de la charge thermoconductrice.

4. Procédé selon l'une quelconque des revendications 1 à 3, dans lequel la charge thermoconductrice est présente dans une quantité totale de 5 à 40 % en poids, rapporté au poids total de la composition polymère, et comprend au moins 75 % en poids de la poudre de graphite sous forme de plaquettes ayant une épaisseur inférieure à 500 nm, rapporté au poids total de la charge thermoconductrice.

5. Procédé selon l'une quelconque des revendications 1 à 4, comprenant, après le mélange à l'état fondu, les étapes consistant à :

- extruder la masse fondue à travers un ou plusieurs orifices pour former un brin ou des brins extrudés ;

- couper le brin ou les brins extrudés pour former des pastilles ; et
- refroidir les pastilles pour former ainsi des pastilles solides.

6. Composition polymère thermoconductrice transformable à chaud comprenant

   (a) 30 à 95 % en poids d'un polymère thermoplastique choisi parmi les polyamides, les polyesters, les sulfures de polyarylène, les oxydes de polyarylène, les polysulfones, les polyarylates, les polyimides, les polyéthercétones, les polyétherimides, les polycarbonates, les copolymères desdits polymères les uns avec les autres et/ou avec d'autres polymères, y compris les élastomères thermoplastiques, et les mélanges desdits polymères et copolymères ; et
   (b) 5 à 40 % en poids d'une poudre de graphite sous forme de plaquettes ayant une épaisseur inférieure à 500 nm, la poudre de graphite ayant une surface spécifique BET, déterminée par la méthode selon ASTM D3037, d'au moins 10 m$^2$/g et une distribution de taille de particules **caractérisée par** un D(v, 0,9) d'au moins 50 $\mu$m telle que déterminée par diffraction laser ;

   dans laquelle les pourcentages pondéraux sont rapportés au poids total de la composition polymère.

7. Composition polymère thermoconductrice transformable à chaud selon la revendication 6, pouvant être obtenue par un procédé selon l'une quelconque des revendications 1 à 5.

8. Composition polymère thermoconductrice transformable à chaud selon la revendication 6 ou 7, composée de

   (b) 30 à 95 % en poids du polymère thermoplastique ;
   (c) 5 à 40 % en poids de la poudre de graphite sous forme de plaquettes ayant une épaisseur inférieure à 500 nm ; et
   (d) 0 à 40 % en poids d'un ou plusieurs autres composants.

9. Composition polymère thermoconductrice transformable à chaud selon l'une quelconque des revendications 6 à 8, dans laquelle le matériau thermoplastique comprend un polyamide.

10. Composition polymère thermoconductrice transformable à chaud selon l'une quelconque des revendications 6 à 9, comprenant 10 à 40 % en poids de fibres de verre, rapporté au poids total de la composition polymère.

11. Composition polymère thermoconductrice transformable à chaud selon l'une quelconque des revendications 6 à 10, comprenant éventuellement une ou plusieurs charges thermoconductrices supplémentaires, dans laquelle la quantité totale de poudre de graphite sous forme de plaquettes ayant une épaisseur inférieure à 500 nm et de charges thermoconductrices supplémentaires se situe dans la gamme de 5 à 40 % en poids, rapporté au poids total de la composition polymère, et la poudre de graphite sous forme de plaquettes ayant une épaisseur inférieure à 500 nm est présente dans une quantité d'au moins 50 % en poids, rapporté au poids total de la poudre de graphite et des charges thermoconductrices supplémentaires.

12. Composition polymère thermoconductrice transformable à chaud selon l'une quelconque des revendications 6 à 11, ayant une conductivité thermique parallèle dans le plan de 2 à 50 W/m·K et/ou une conductivité thermique à travers le plan de 0,5 à 10 W/m·K, la conductivité thermique étant dérivée de la diffusivité thermique (D) mesurée par la technologie du flash laser selon ASTM E1461-01 sur des échantillons moulés par injection de 80x80x2 mm dans la direction dans le plan, respectivement à travers le plan, de la densité apparente (p) et de la chaleur spécifique (Cp), à 20 °C, en utilisant la méthode décrite dans Polymer Testing (2005, 628-634).

13. Composition polymère thermoconductrice transformable à chaud selon la revendication 12, la composition comprenant :

    - 5 à 20 % en poids de charge thermoconductrice ayant une conductivité thermique parallèle d'au moins 3 W/m·K et/ou une conductivité thermique à travers le plan d'au moins 0,8 W/m·K ; ou
    - 20 à 30 % en poids de charge thermoconductrice ayant une conductivité thermique parallèle d'au moins 5 W/m·K et/ou une conductivité thermique à travers le plan d'au moins 1,2 W/m·K ; ou
    - 30 à 40 % en poids de charge thermoconductrice ayant une conductivité thermique parallèle d'au moins 8 W/m·K et/ou une conductivité thermique à travers le plan d'au moins 1,2 W/m·K,

dans laquelle les pourcentages pondéraux sont rapportés au poids total de la composition polymère.

14. Utilisation de la composition polymère thermoconductrice transformable à chaud selon l'une quelconque des revendications 6 à 13 dans un composant d'un ensemble électrique ou électronique ou dans une pièce de moteur ou dans un échangeur de chaleur.

**REFERENCES CITED IN THE DESCRIPTION**

**Patent documents cited in the description**

- US 2003022043 A1

**Non-patent literature cited in the description**

- *Polymer Testing,* 2005, 628-634

- **W. NUNES DOS SANTOS ; P. MUMMERY ; A. WALLWORK.** *Polymer Testing,* 2005, vol. 14, 628-634